# EUROPÄISCHE PATENTSCHRIFT

(11) **EP 1 982 878 B1**
(45) Veröffentlichungstag und Bekanntmachung des Hinweises auf die Patenterteilung: **28.07.2010**
(21) Anmeldenummer: 08154555.0
(22) Anmeldetag: 15.04.2008
(51) Int. Cl.: B60R 25/02

(54) **Vorrichtung zur Ansteuerung eines Sperrgliedes**
Device for operating a blocking element
Dispositif de commande d'un organe de verrouillage

(30) Priorität: 16.04.2007 DE 102007018218
(43) Veröffentlichungstag der Anmeldung: 22.10.2008
(73) Patentinhaber: Huf Hülsbeck & Fürst GmbH & Co. KG, 42551 Velbert (DE)
(72) Erfinder: Trischberger, Werner, 85229 Markt Indersdorf (DE)
(74) Vertreter: Vogel, Andreas

(56) Entgegenhaltungen:
- EP-A- 1 029 755
- WO-A-2004/098959
- DE-B3- 10 247 802

## Beschreibung

Die Erfindung betrifft eine Vorrichtung zur Ansteuerung eines beweglichen Sperrgliedes eines funktionswesentlichen Bauteils, insbesondere einer Lenksäule oder eines Gangschalthebels eines Kraftfahrzeuges, mit dem Sperrglied, das zumindest in zwei Positionen bringbar ist, nämlich in eine Verriegelungsposition, in der das Sperrglied in einer Wirkverbindung mit dem funktionswesentlichen Bauteil steht, und eine Entriegelungsposition, in der das Sperrglied losgelöst vom funktionswesentlichen Bauteil ist, und einem Sicherungselement, das durch ein Steuerelement in eine Sicherungslage und in eine Entsicherungslage bewegbar ist, wobei in der Sicherungslage das Sicherungselement das Sperrglied in seiner Verriegelungsposition arretiert.

In der DE 10 2006 017 875 ist eine Vorrichtung zur Ansteuerung eines Sperrgliedes einer Lenksäule eines Kraftfahrzeuges offenbart, wobei ein Sperrglied vorgesehen ist, das durch ein Steuerelement in zwei Positionen bewegt werden kann. Zum einen kann das Sperrglied eine Verriegelungsposition einnehmen, in der es durch eine Öffnung aus der Vorrichtung herausragt und in einer Wirkverbindung mit der Lenksäule steht. Zum anderen kann das Sperrglied eine Entriegelungsposition einnehmen, bei der es weitestgehend innerhalb der Vorrichtung angeordnet ist und nicht in die Lenksäule eingreift. Des Weiteren ist ein Sicherungselement vorgesehen, womit das Sperrglied zumindest in der Entriegelungsposition arretierbar ist. Während des Verriegelungsvorganges des Sperrgliedes entstehen Geräusche, insbesondere wenn das Sperrglied in die Lenksäule verfahren wird, die als störend empfunden werden können.

Eine Vorrichtung mit den Merkmalen des Oberbegriffs des Anspruchs 1 ist aus der DE 102 47 802 B2 bekannt.

Es ist Aufgabe der vorliegenden Erfindung, eine Vorrichtung zur Ansteuerung eines Sperrgliedes zu schaffen, bei der die genannten Nachteile vermieden werden, insbesondere eine Vorrichtung bereit gestellt wird, bei der eine abrupte Bewegung des Sperrgliedes während der Verriegelung weitestgehend verhindert wird.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Sicherungselement mit einem ersten und einem zweiten Bereich ausgeführt ist, wobei eine Verriegelungsposition des Sperrgliedes weitestgehend geräuschlos erfolgt, indem der erste Bereich in einer Führung des Steuerelementes eingreift, wodurch das Sicherungselement von seiner Entsicherungslage in die Sicherungslage zwangsgeführt ist, und der zweite Bereich mit einer Steuerfläche des Sperrgliedes zusammenwirkt.

Der wesentliche Vorteil dieser erfindungsgemäßen Vorrichtung ist, dass während des Verriegelungsvorganges, das bedeutet während sich das Sperrglied von der Entriegelungsposition in die Verriegelungsposition bewegt, der zweite Bereich des Sicherungselementes entlang der Steuerfläche des Sperrgliedes gleitet, wodurch verhindert wird, dass das Sperrglied schlagartig in die Verriegelungsposition sich bewegt. Während sich das Sicherungselement aus der Sicherungslage in die Entsicherungslage bewegt, gleitet der zweite Bereich des Sicherungselementes entlang der Steuerfläche des Sperrgliedes ab, wobei gleichzeitig sich das Sperrglied aus der Verriegelungsposition in Richtung der Entriegelungsposition bewegt. Jedoch verhindert der zweite Bereich des Sicherungselementes, der an der Steuerfläche des Sperrgliedes anliegt, dass das Sperrglied abrupt in die Verriegelungsposition sich bewegt. Solange der zweite Bereich des Sicherungselementes in Kontakt mit der Steuerfläche des Sperrgliedes ist, wird eine vollständige Bewegung des Sperrgliedes in Richtung der Verriegelungsposition verhindert. Das Sicherungselement mit dem zweiten Bereich dient somit als eine Art Dämpfungselement für die Bewegung des Sperrgliedes, um ein Aufschlagen des Sperrgliedes auf das funktionswesentliche Bauteil zu verhindern. Des Weiteren gewährleistet das Sicherungselement in seiner Sicherungslage, dass bei einem etwaigen Bruch oder einer Zerstörung der erfindungsgemäßen Vorrichtung nicht das Sperrglied aus der Entriegelungsposition in die Verriegelungsposition ungewollt sich bewegt. Die Bewegung des Sicherungselementes, insbesondere von seiner Sicherungslage in die Entsicherungslage wird über das sich bewegende Steuerelement ausgelöst, wobei die Führung des Steuerelementes derart ausgeführt ist, dass der erste Bereich des Sicherungselementes entlang der Führung, die als eine Art Kulisse ausgeführt ist, sich bewegt, wodurch eine Bewegung des Sicherungselementes sowie des zweiten Bereiches des Sicherungselementes von der Sicherungslage in die Entsicherungslage oder umgekehrt ausgelöst wird. In der Verriegelungsposition befindet sich der zweite Bereich des Sicherungselementes in einem definierten Abstand zur Steuerfläche des Sperrgliedes.

In einer bevorzugten Ausführungsform der Erfindung ist die Führung mit mindestens zwei Führungsbereichen ausgebildet, wobei während der Bewegung des Steuerelementes der erste Bereich entlang der Führungsbereiche verfährt, wodurch das Sicherungselement eine Hubbewegung durchführt. Beim Verriegelungsvorgang bewegt sich das Steuerelement in Richtung des funktionswesentlichen Bauteils, wobei der erste Bereich, der als Nocken ausgebildet sein kann, innerhalb der Führung verfährt. Die Führung, die mit dem Steuerelement ein gemeinsames Bauteil bilden, bewegt sich ebenfalls in Richtung des funktionswesentlichen Bauteils, so dass der erste Bereich des Sicherungselementes durch die Geometrie der Führung zwangsgeführt ist. Während sich nun das Steuerelement für den Verriegelungsvorgang bewegt, verbleibt das Sicherungselement mit dem ersten Bereich zwar in seiner horizontalen Achse, wird jedoch durch die Zwangsführung der Führung aus der Sicherungslage in Richtung der Entsicherungslage translatorisch bewegt. Gleichzeitig entfernt sich der zweite Bereich des Sicherungselementes von dem Sperrglied, wobei die Steuerfläche des Sperrgliedes entlang des zweiten Bereiches des Sicherungselementes gleitet und somit das Sperrglied langsam in Richtung der Verriegelungsposition sich bewegt. Vorzugsweise ist das Sperrglied mit einer Ausnehmung ausgebildet, in der der zweite Bereich des Sicherungselementes innerhalb der Verriegelungsposition des Sperrgliedes komplett aufgenommen ist. Hierbei ist der zweite Bereich nasenartig ausgeführt, wobei die Geometrie der Ausnehmung des Sperrgliedes im Wesentlichen dem nasenartigen zweiten Bereich des Sicherungselementes angepasst ist. In der Verriegelungsposition bilden der zweite Bereich des Sicherungselementes sowie die korrespondierende Ausnehmung des Sperrgliedes einen Formschluss. In der Entsicherungslage kontaktiert der zweite Bereich des Sicherungselementes nicht das in der Verriegelungsposition sich befindende Sperrglied.

Vorteilhafterweise sind ein erster Führungsbereich mit einer ersten Führungsrichtung und ein zweiter Führungsbereich mit einer zweiten Führungsrichtung in der Führung vorgesehen. Während des Verriegelungsvorganges bewegt sich der erste Bereich des Sicherungselementes innerhalb des ersten Führungsbereiches, wobei das Sicherungselement translatorisch in Richtung der Entsicherungslage dadurch bewegt wird, dass aufgrund der ersten Führungsrichtung des ersten Führungsbereiches eine Zwangsführung des ersten Bereiches des Sicherungselementes erfolgt, wobei gleichzeitig die Führung sowie der erste und der zweite Führungsbereich translatorisch, senkrecht zur Bewegungsachse des Sicherungselementes sich bewegen. Verlässt der erste Bereich des Sicherungselementes den ersten Führungsbereich, gelangt der erste Bereich sofort in den zweiten Führungsbereich mit der zweiten Führungsrichtung. Die zweite Führungsrichtung ist derart ausgerichtet, dass während die Führung mit dem Steuerelement sich bewegt, der erste Bereich des Sicherungselementes sich relativ zum zweiten Führungsbereich bewegt. Während sich der erste Bereich des Sicherungselementes im Übergang zwischen dem ersten und dem zweiten Führungsbereich befindet, befindet sich der zweite Bereich des Sicherungselementes außerhalb der Ausnehmung des Sperrgliedes, so dass in dieser Position des ersten und des zweiten Bereiches des Sicherungselementes die Entsicherungslage erreicht ist. In der Entsicherungslage besteht keine Zwangsführung des Sperrgliedes mit seiner Steuerfläche entlang des zweiten Bereiches des Sicherungselementes. Über die Bewegung des Steuerelementes verfährt das Sperrglied in die Verriegelungsposition. In einer möglichen Ausführungsform der Erfindung können der erste sowie der zweite Führungsbereich einen linearen und/oder bogenförmigen Verlauf aufweisen.

Erfindungsgemäß kann vorgesehen sein, dass das Sperrglied translatorisch entlang einer ersten Achse in seine jeweilige Position bewegbar ist, wobei die Steuerfläche schräg zur ersten Achse ausgerichtet ist und der zweite Bereich des Sicherungselementes der Steuerfläche angepasst ist. Bevorzugt entspricht die zweite Führungsrichtung des zweiten Führungsbereiches der ersten Achse, entlang welcher das Sperrglied translatorisch in seine jeweilige Position geführt wird. Hierbei kann die Steuerfläche zur ersten Achse einen Winkel α aufweisen, der in einem Bereich von 20°≤ α ≤ 80°, vorzugsweise in einem Bereich von 30°≤ α ≤ 60° liegt. Über den Winkel der Steuerfläche kann entsprechend die Geschwindigkeit des Sperrgliedes während des Verriegelungsvorganges eingestellt werden. Des Weiteren hat sich gezeigt, dass sich in dem genannten Winkelbereich ein optimiertes Kräfteverhältnis zwischen Sperrglied und Sicherungselement einstellt.

In einer bevorzugten Ausgestaltung der Erfindung ist die Führung als eine einseitig zum Sperrglied offene Nut ausgeführt. Innerhalb dieser Nut ist der vorsprungartige, erste Bereich des Sicherungselementes bewegbar, wodurch das Sicherungselement eine Hubbewegung erfährt.

Die erfindungsgemäße Vorrichtung kann ein Sicherungselement mit zwei miteinander verbundenen Armen aufweisen, wobei am freien Ende des ersten Arms der erste Bereich und am freien Ende des zweiten Arms der zweite Bereich ausgebildet ist. Hierbei stellt das Sicherungselement mit seinen Armen eine Art Gestänge dar, das durch die sich verschiebende Führung, in der der erste Bereich zwangsgeführt ist, translatorisch von der Sicherungslage in die Entsicherungslage und umgekehrt bewegt werden kann. Um eine besonders kompakte Bauform der erfindungsgemäßen Vorrichtung erzielen zu können, können die Arme des Sicherungselementes zueinander fluchtend angeordnet sein.

Vorteilhafterweise ist das Steuerelement über eine Antriebseinheit translatorisch bewegbar. Beispielsweise kann zwischen der Antriebseinheit und dem Steuerelement ein Koppelelement angeordnet sein, das über die Antriebseinheit translatorisch bewegbar ist und somit das Steuerelement antreibt. Weiterhin ist es denkbar, dass die Antriebseinheit ein scheibenförmiges Antriebselement aufweist, das um eine Drehachse antreibbar ist, wobei das Antriebselement mit einer Führungsbahn versehen ist, entlang dieser Bahn das Koppelelement führbar ist. Dieses Antriebselement kann selbst aus einem Motor oder einer angetriebenen Scheibe mit einer ebenen Führungsbahn bestehen. Zweckmäßigerweise ist die Führungsbahn spiralförmig ausgeführt, wodurch ermöglicht ist, die translatorische Bewegung des Steuerelementes nicht proportional zur Drehung des Antriebselementes auszugestalten. Hierdurch ist es möglich, in den einzelnen Bewegungsabschnitten unterschiedliche Verfahrensgeschwindigkeiten für das Steuerelement und damit das Sperrglied zu bewirken.

Um das Sperrglied aus der Verriegelungsposition zuverlässig in die Entriegelungsposition über das Koppelelement bewegen zu können, ist das Sperrglied mit einem Kontaktbereich ausgeführt, der über das sich bewegende Koppelelement mitbewegt wird. In einer bevorzugten Ausführungsform der Erfindung weist das Sperrglied eine Ausnehmung aufweist, die zu einer Seite durch den Kontaktbereich begrenzt ist und in der das Koppelelement zumindest teilweise sich erstreckt. Die Ausnehmung erstreckt sich in Richtung der ersten Achse, entlang dieser das Sperrglied in seine jeweilige Position bewegt werden kann. In einer möglichen Alternative der Erfindung kann die Ausnehmung beispielsweise als Langloch ausgeführt sein. Ebenfalls ist es denkbar die Ausnehmung als einseitig offene Nut auszugestalten, die am Sperrglied ausgeführt ist. Während der Bewegung des Sperrgliedes in die jeweilige Position, liegt der Kontaktbereich auf dem Koppelelement auf, wobei das durch die Antriebseinheit angetriebene Koppelelement mit dem Kontaktbereich unmittelbar in Verbindung steht und somit das Sperrglied bewegt. Der Kontaktbereich, der mit dem Sperrglied ein gemeinsames Bauteil bildet, kann in einer weiteren Ausführungsform schulterartig ausgeführt sein und unmittelbar am Koppelement aufliegen. Die Ausbildung einer am Kontaktbereich angrenzenden Ausnehmung ist aus folgendem Grund besonders wichtig: Falls während des Verriegelungsvorganges das Sperrglied nicht optimal in das funktionswesentliche Bauteil eingreift, da dieses Bauteil beispielsweise nicht die entsprechende Lage für die Verriegelungsposition des Sperrgliedes zur Verfügung stellt, kann sich das Koppelelement - angetrieben durch die Antriebseinheit - in der Ausnehmung zwar entsprechend bewegen. Das Sperrglied erreicht jedoch aufgrund der genannten Fehlstellung des funktionswesentlichen Bauteils nicht seine endgültige Verriegelungsposition. Durch Ausbildung der genannten Ausnehmung am Sperrglied kann auf einfache Weise einer Zerstörung, insbesondere des Koppelelementes entgegen gewirkt werden.

Falls es aus etwaigen Gründen zu einer Zerstörung, insbesondere am Koppelelement zwischen der Antriebseinheit und dem sich beweglichen Steuerelement kommen sollte, ist ein Federelement als Energiespeicher zwischen dem Steuerelement und einem feststehenden Gehäuseteil der Vorrichtung vorgesehen. Dieses Federelement stellt die notwendige Kraft zur Verfügung, um bei der genannten Zerstörung eine Bewegung des Steuerelementes zu verhindern, während sich das Sperrglied in der Entriegelungsposition befindet. Somit kann in der Entriegelungsposition des Sperrgliedes durch einen etwaigen Bruch des Koppelelementes ein ungewollter Verriegelungsvorgang wirkungsvoll verhindert werden.

Eine weitere die Erfindung verbessernde Maßnahme kann vorsehen, dass das Steuerelement einen Aufnahmebereich aufweist, in dem das Sperrglied entlang der ersten Achse verschiebbar gelagert ist, wobei im Aufnahmebereich eine Ausgleichsfeder angeordnet ist, die auf das Sperrglied wirkt. Die Ausgleichsfeder dient unter anderem dazu, dass das Sperrglied mit seinem Kontaktbereich zuverlässig am Koppelelement kontaktiert ist. Des Weiteren übt die Ausgleichsfeder eine gewisse Kraft auf das Sperrglied aus, wodurch das Sperrglied während des Verriegelungsvorganges zuverlässig in die Verriegelungsposition geführt wird. Vorteilhafterweise ist das als Energiespeicher wirkende Federelement wesentlich stärker ausgebildet als die Ausgleichsfeder. Der Aufnahmebereich ist als eine Art Tasche ausgeführt, in der das Sperrglied linear geführt werden kann.

Weiterhin ist es denkbar, dass das Sicherungselement in der Sicherungslage ein Schaltelement betätigt. Bei Betätigung sendet das Schaltelement ein Signal aus, welches von einer Elektronikeinheit des Kraftfahrzeuges, insbesondere des Schließsystems erkannt wird. Bei dem Schaltelement kann es sich beispielsweise um einen Mikroschalter handeln, der an einem Gehäuseteil der Vorrichtung angeordnet ist. Das Schaltelement kann alternativ auch als optisches oder sensorisches Schaltelement ausgeführt sein. Beispielsweise kann das Schaltelement ein Hallelement oder eine Lichtschranke sein.

Des Weiteren kann vorgesehen sein, dass die erfindungsgemäße Vorrichtung durch eine Steuerelektronik überwacht wird. Aus sicherheitstechnischen Gründen ist es vorteilhaft, wenn neben der Erfassung der Position des Sicherheitselementes auch die Position des Kopplungselementes als auch die Position des Sperrgliedes erfasst werden. Dieses kann beispielsweise durch Sensoren, insbesondere Magnetfeldsensoren, erfolgen, die das magnetische Feld eines auf dem Kopplungselement oder Sperrglied angebrachten Permanentmagneten erfassen. Dadurch kann eine elektronische Steuerung die Funktionsfähigkeit der mechanischen Kopplung zwischen dem Kopplungselement und des Sperrgliedes überwachen sowie eine Manipulation erkennen.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Vorrichtung zur Ansteuerung eines Sperrgliedes, wobei das Sperrglied sich in einer Entriegelungsposition befindet,
- Figur 2: die Vorrichtung gemäß Figur 1, wobei das Sperrglied sich in einer Verriegelungsposition befindet,
- Figur 3: eine Schnittansicht III-III gemäß Figur 1,
- Figur 4: eine Schnittansicht IV-IV gemäß Figur 1 und
- Figur 5: eine Schnittansicht V-V gemäß Figur 2.

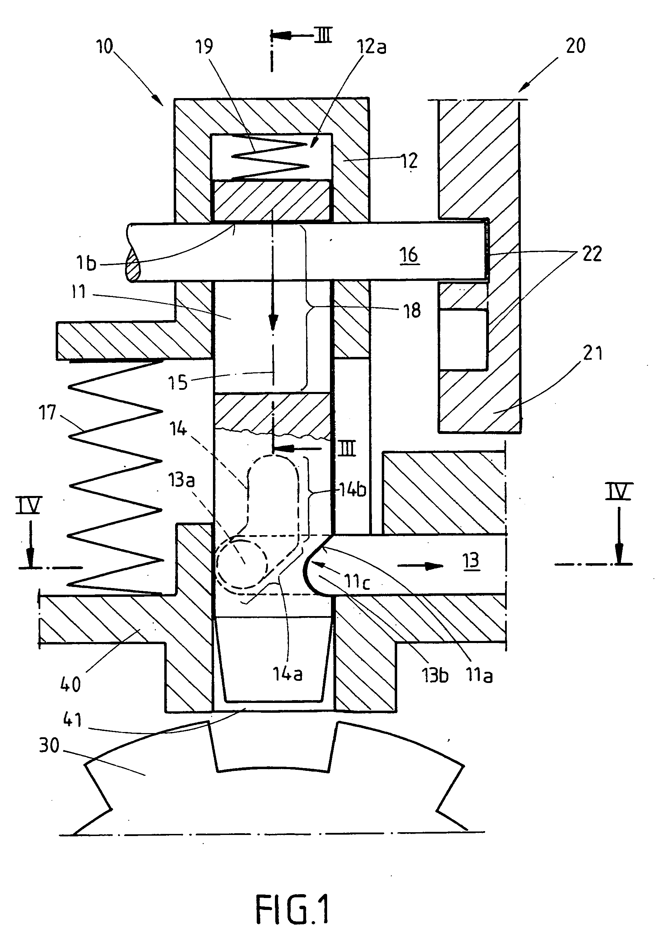

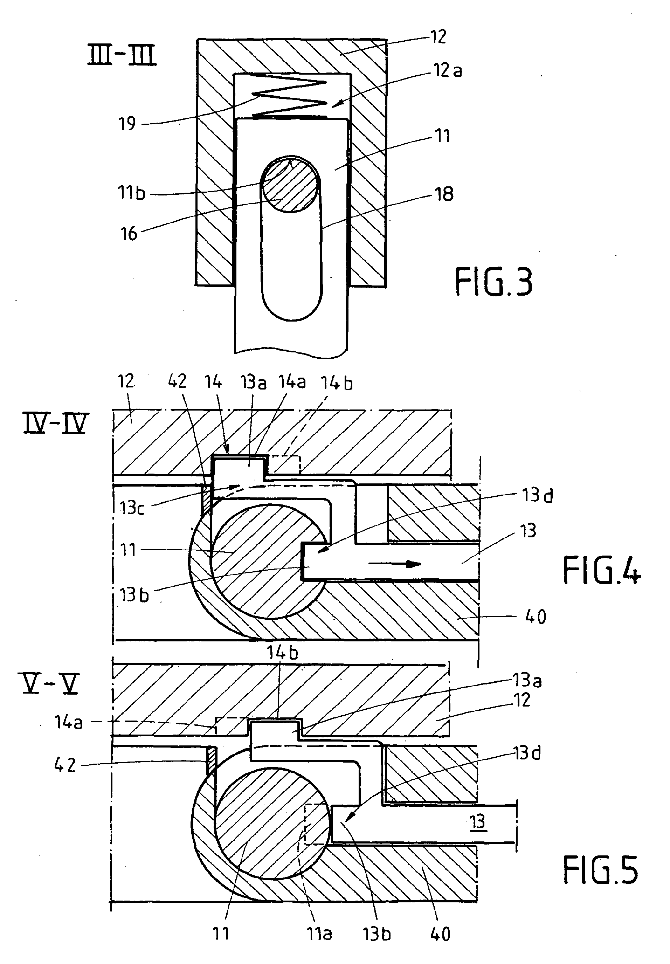

In Figur 1 und 4 ist eine erfindungsgemäße Vorrichtung 10 zur Ansteuerung eines Sperrgliedes 11 einer Lenksäule 30 eines nicht dargestellten Kraftfahrzeuges gezeigt, wobei das Sperrglied 11 sich in einer Entriegelungsposition befindet. Es ist ein Sicherungselement 13 vorgesehen, dass durch ein bewegbares Steuerelement 12 in eine Sicherungslage und in eine Entsicherungslage bewegbar ist. In Figur 1 befindet sich das Sicherungselement 12 in der Sicherungslage. Das Sicherungselement 12 ist als eine Art Gestänge ausgeführt, welches in den Figuren 4 und 5 verdeutlicht ist. Das Sicherungselement 13 weist einen ersten Arm 13c mit einem ersten Bereich 13a und einem zweiten Arm 13d mit einem zweiten Bereich 13b auf. Der erste Bereich 13a erstreckt sich in eine Führung 14 des Steuerelementes 12. Die Führung 14 ist hierbei mit zwei Führungsbereichen 14a, 14b ausgebildet, wobei der erste Bereich 13a des Sicherungselementes 13 sich in der Verriegelungsposition des Sperrgliedes 11 im ersten Führungsbereich 14a befindet. Der erste Führungsbereich 14a weist eine erste Führungsrichtung und der zweite Führungsbereich 14b weist eine zweite Führungsrichtung auf, wobei die erste Führungsrichtung in einem Winkel zur zweiten Führungsrichtung ausgerichtet ist. Beide Führungsbereiche 14a, 14b weisen einen linearen Verlauf auf. Der erste Führungsbereich 14a ist kürzer ausgebildet als der zweite Führungsbereich 14b.

Das Steuerelement 12 wird im dargestellten Ausführungsbeispiel über eine Antriebseinheit 20 translatorisch bewegt. Hierbei ist zwischen der Antriebseinheit 20 und dem Steuerelement 12 ein Koppelelement 16, das als Stift ausgebildet ist, angeordnet, das über die Antriebseinheit 20 translatorisch bewegt wird. Die Antriebseinheit 20 weist ein scheibenförmiges Antriebselement 21 auf, das um eine nicht dargestellte Drehachse antreibbar ist. Des Weiteren ist das Antriebselement 21 mit einer spiralförmigen Führungsbahn 22 versehen, entlang dieser Bahn 22 das Koppelelement 16 führbar ist. Während das Antriebselement 21 - beispielsweise über einen Motor - um seine Drehachse bewegt wird, gleitet das Koppelelement 16 entlang der Bahn 22 ab und führt somit eine Hubbewegung nach unten aus. Diese translatorische Hubbewegung des Koppelelementes 16 wird unmittelbar auf das Steuerelement 12 übertragen, welches sich entsprechend bewegt. Das Koppelelement 16 ist an einem freien Ende im Eingriff mit der Führungsbahn 22. Des Weiteren erstreckt sich das Koppelelement 16 ausgehend von der Führungsbahn 22 durch das Steuerelement 12 sowie durch das Sperrglied 11, welches in Figur 3 ebenfalls gezeigt ist. Das Koppelelement 16 erstreckt sich durch zwei Öffnungen des Steuerelementes 12 und ist mit dem Steuerelement 12 fest verbunden.

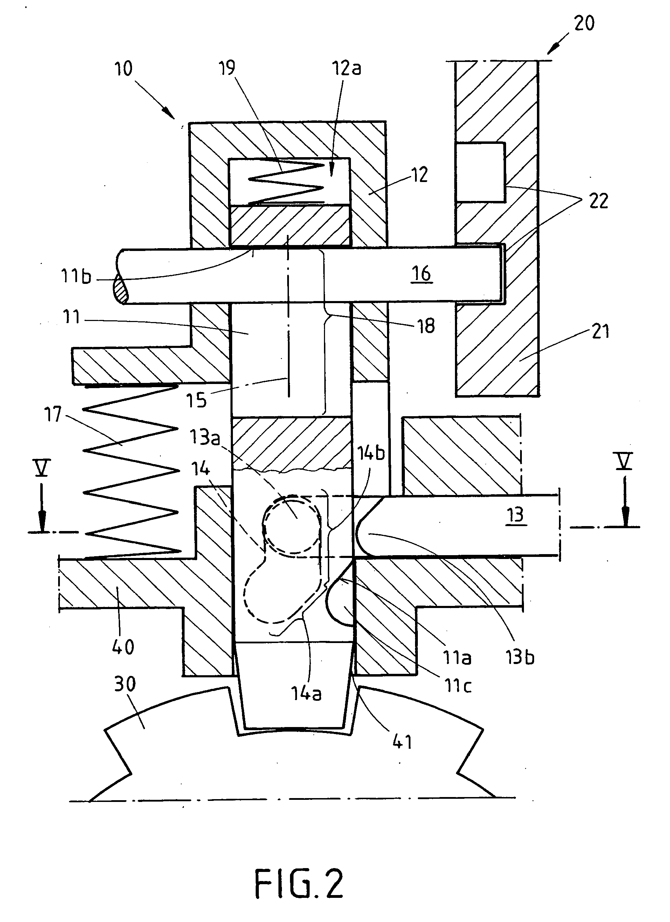

Wird nun über die Antriebseinheit 20 das Koppelelement 16 aus seiner Lage gemäß Figur 1 linear in Richtung der Lenksäule 30 bewegt, bewegt sich gleichzeitig das Steuerelement 12 nach unten mit. Gleichzeitig bewegt sich die Führung 14, die Bestandteil des Steuerelementes 12 ist, translatorisch in Richtung der Lenksäule 30. Der erste Bereich 13a befindet sich zwangsgeführt innerhalb der Führung 14 und wird ausgehend von der Position gemäß Figur 1 durch eine translatorisch, nach unten gerichtete Bewegung des Steuerelementes 12 nach rechts von seiner aktuellen Sicherheitslage in eine Entsicherungslage bewegt, die in Figur 2 und in Figur 5 dargestellt ist. In der Sicherungslage des Sicherungselementes 13 befindet sich der zweite Bereich 13b des Sicherungselementes 13 in einer Ausnehmung 11c des Sperrgliedes 11. Das Sperrglied 11 weist im Bereich seiner Ausnehmung 11 c eine Steuerfläche 11a auf, an der der zweite Bereich 13b des Sicherungselementes 13 in seiner Sicherungslage anliegt. Während des Entriegelungsvorganges das Steuerelement 12 mit seiner Führung 14 translatorisch in Richtung der Lenksäule 30 sich bewegt und der erste Bereich 13a sowie der zweite Bereich 13b senkrecht zur Bewegungsrichtung des Steuerelementes 12 sich in die Entsicherungslage des Sicherungselementes 13 nach recht bewegen, gleitet die Steuerfläche 11a des Sperrgliedes 11 entlang des nasenartigen zweiten Bereichs 13b des Sicherungselementes 13 ab. Gleichzeitig bewegt sich das Sperrglied 11 entlang seiner ersten Achse 15 in Richtung der Lenksäule 30 in die Verriegelungsposition. Solange die Steuerfläche 11a in Kontakt mit dem zweiten Bereich 13b des Sicherungselementes 13 ist, wird die Bewegung des Sperrgliedes 11 in Richtung der Verriegelungsposition abgebremst und gedämpft, so dass ein schlagartiger Stoß des Sperrgliedes 11 in die Lenksäule 30 verhindert wird. Wie deutlich zu erkennen ist, ist die Steuerfläche 11a gemäß dem dargestellten Ausführungsbeispiels schräg zur ersten Achse 15 ausgerichtet und der zweite Bereich 13b des Sicherungselementes 13 ist der Ausnehmung 11c geometrisch angepasst. Im vorliegenden Ausführungsbeispiel weist die Steuerfläche 11a zur ersten Achse 15 einen Winkel von ca. 45° auf.

Während des Verriegelungsvorganges verschiebt sich das Sicherungselement 13 linear, senkrecht zur ersten Achse 15, wobei die Hubbewegung des Sicherungselementes 13 ausschließlich erfolgt, wenn der erste Bereich 13a innerhalb des ersten Führungsbereiches 14a der Nut 14 verfahren wird. In der Entsicherungslage des Sicherungselementes 13, die in Figur 2 und Figur 5 dargestellt ist, verfährt der erste Bereich 13a des Sicherungselementes 13 innerhalb des zweiten Führungsbereiches 14b, wobei keine Hubbewegung des Sicherungselementes 13 erfolgt. Das Sperrglied 11 bewegt sich allerdings entlang der ersten Achse 15 in die Verriegelungsposition.

Wie im Ausführungsbeispiel dargestellt ist, ist ein Federelement 17 als Energiespeicher zwischen dem Steuerelement 12 und einem feststehenden Gehäuseteil 40 der Vorrichtung 10 vorgesehen. Während des Verriegelungsvorganges wird über das sich bewegende Steuerelement 12 die Feder 17 gespannt. Darüber hinaus ist eine weitere Feder 19, die als Ausgleichsfeder wirkt, innerhalb eines Aufnahmebereiches 12a des Steuerelementes 12 angeordnet. Das Sperrglied 11 ist entlang der ersten Achse 15 innerhalb des Aufnahmebereiches 12a verschiebbar gelagert, wobei die Ausgleichsfeder 19 unmittelbar eine Druckkraft auf das Sperrglied 11 in Richtung der Lenksäule 30 ausübt. Wie auch in Figur 3 dargestellt ist, ist das Sperrglied 11 mit einem Kontaktbereich 11 b ausgeführt, der unmittelbar auf dem Koppelelement 16 aufliegt. Wird nun ein Entriegelungsvorgang über die Antriebseinheit 20 gestartet, wird das Koppelelement 16 aus seiner Position gemäß Figur 2 über die Antriebseinheit 20 translatorisch nach oben bewegt, wodurch gleichzeitig das Steuerelement 12 mitbewegt wird. Gleichzeitig verfährt der erste Bereich 13a des Sicherungselementes 13 entlang der sich mitbewegenden Führung 14 innerhalb des zweiten Führungsbereiches 14b. Solange sich der erste Bereich 13a des Sicherungselementes 13 innerhalb des zweiten Führungsbereiches 14b befindet, verbleibt das Sicherungselement 13 in seiner Entsicherungslage. Bei der Bewegung des Koppelelementes 16 wird gleichzeitig der auf dem Koppelelement 16 aufliegende Kontaktbereich 11 b des Sperrgliedes 11 mit nach oben bewegt. Somit bewegt sich das Sperrglied 11 aus der Lenksäule 30 von seiner Verriegelungsposition in Richtung der Entriegelungsposition. Hat die Ausnehmung 11c die horizontale Lage des zweiten Bereiches 13b des Sicherungselementes 13 erreicht, verfährt der erste Bereich 13a des Sicherungselementes 13 vom zweiten Führungsbereich 14b in den ersten Führungsbereich 14a und bewirkt, dass das Sicherungselement 13 nach links, in die Sicherungslage und somit in die Ausnehmung 11c des Sperrgliedes 11 verfährt. Somit wird die Entriegelungsposition gemäß Figur 1 wieder erreicht.

In Figur 4 und Figur 5 ist des Weiteren ein Mikroschalter 42 dargestellt, der durch das Sicherungselement 12 in der Sicherungslage betätigt wird. Der Mikroschalter 42 sendet ein Signal einer nicht dargestellten Elektronikeinheit aus, wodurch mitgeteilt wird, dass sich das Sicherungselement 13 in der Sicherungslage befindet.

In Figur 1 bis 3 ist des Weiteren verdeutlicht, dass das Sperrglied 11 mit einer Ausnehmung 18 ausgeführt ist, die zu einer Seite durch den Kontaktbereich 11 b begrenzt ist und in der das Koppelelement 16 zumindest teilweise sich erstreckt. Die Ausnehmung 18 dient unter anderem dazu, falls bei einer Fehlstellung der Lenksäule 30 das Sperrglied 11 nicht vollständig in seine Verriegelungsposition verfahren kann. In einem derartigen Fall würde das Koppelelement 16 in die in Figur 2 dargestellte Position verfahren. Jedoch würde ein Abstand zwischen dem Kontaktbereich 11 b und dem Koppelelement 16 entstehen. Durch eine Ausführung des Sperrgliedes 11 mit der Ausnehmung 18 kann für einen derartigen Fall eine Zerstörung, beispielsweise des Koppelelementes 16 wirksam verhindert werden.

### Bezugszeichenliste

- 10: Vorrichtung
- 11: Sperrglied
- 11a: Steuerfläche des Sperrgliedes
- 11b: Kontaktbereich des Sperrgliedes
- 12: Steuerelement
- 12a: Aufnahmebereich
- 13: Sicherungselement
- 13a: erster Bereich des Sicherungselementes
- 13b: zweiter Bereich des Sicherungselementes
- 13c: erster Arm des Sicherungselementes
- 13d: zweiter Arm des Sicherungselementes
- 14: Führung
- 14a: erster Führungsbereich
- 14b: zweiter Führungsbereich
- 15: erste Achse
- 16: Koppelelement, Stift
- 17: Federelement
- 18: Ausnehmung, Langloch
- 19: Ausgleichsfeder
- 20: Antriebseinheit
- 21: Antriebselement
- 22: Führungsbahn
- 30: funktionswesentliches Bauteil, Lenksäule
- 40: Gehäuseteil
- 41: Öffnung
- 42: Schaltelement, Mikroschalter

## Patentansprüche

1. Vorrichtung (10) zur Ansteuerung eines beweglichen Sperrgliedes (11) eines funktionswesentlichen Bauteils (30), insbesondere einer Lenksäule oder eines Gangschalthebels eines Kraftfahrzeuges, mit
dem Sperrglied (11), das zumindest in zwei Positionen bringbar ist, nämlich in
eine Verriegelungsposition, in der das Sperrglied (11) in einer Wirkverbindung mit dem funktionswesentlichen Bauteil (30) steht, und
eine Entriegelungsposition, in der das Sperrglied (11) losgelöst vom funktionswesentlichen Bauteil (30) ist, und
einem Sicherungselement (13), das durch ein Steuerelement (12) in eine Sicherungslage und in eine Entsicherungslage bewegbar ist, wobei in der Sicherungslage das Sicherungselement (13) das Sperrglied (11) in seiner Entriegelungsposition arretiert,
wobei das Sicherungselement (13) mit einem ersten (13a) und einem zweiten Bereich (13b) ausgeführt ist, wobei
der erste Bereich (13a) in einer Führung (14) des Steuerelementes (12) eingreift, wodurch das Sicherungselement (13) von seiner Entsicherungslage in die Sicherungslage zwangsgeführt ist, **dadurch gekennzeichnet dass** der zweite Bereich (13b) mit einer Steuerfläche (11a) des Sperrgliedes (11) derart zusammenwirkt, dass während des Verriegelungsvorganges der zweite Bereich (13b) des Sicherungselementes (13) entlang der Steuerfläche (11a) des sich in Richtung der Verriegelungsposition bewegenden Sperrgliedes (11) gleitet, um ein Aufschlagen des Sperrgliedes (11) auf das funktionswesentliche Bauteil zu verhindern.

2. Vorrichtung (10) nach Anspruch 1,
**dadurch gekennzeichnet,**
**dass** die Führung (14) mit mindestens zwei Führungsbereichen (14a,14b) ausgebildet ist, wobei während der Bewegung des Steuerelementes (12) der erste Bereich (13a) entlang der Führungsbereiche (14a,14b) verfährt, wodurch das Sicherungselement (13) eine Hubbewegung durchführt.

3. Vorrichtung (10) nach Anspruch 2,
**dadurch gekennzeichnet,**
**dass** ein erster Führungsbereich (14a) eine erste Führungsrichtung und ein zweiter Führungsbereich (14b) eine zweite Führungsrichtung aufweist.

4. Vorrichtung (10) nach Anspruch 3,
**dadurch gekennzeichnet,**
**dass** die erste Führungsrichtung in einem Winkel zur zweiten Führungsrichtung ausgerichtet ist.

5. Vorrichtung (10) nach Anspruch 3 oder 4,
**dadurch gekennzeichnet,**
**dass** der erste und der zweite Führungsbereich (14a, 14b) einen linearen oder bogenförmigen Verlauf aufweisen.

6. Vorrichtung (10) nach einem der vorhergehenden Ansprüche,
**dadurch gekennzeichnet,**
**dass** das Sperrglied (11) translatorisch entlang einer ersten Achse (15) in seine jeweilige Position bewegbar ist, wobei die Steuerfläche (11a) schräg zur ersten Achse (15) ausgerichtet ist und der zweite Bereich (13b) des Sicherungselementes (13) der Steuerfläche (11a) angepasst ist.

7. Vorrichtung (10) nach Anspruch 6
**dadurch gekennzeichnet,**
**dass** die Steuerfläche (11a) zur ersten Achse (15) einen Winkel α aufweist, der in einem Bereich von 20°≤ α ≤ 80°, vorzugsweise in einem Bereich von 30°≤ α ≤ 60° liegt.

8. Vorrichtung (10) nach einem der vorhergehenden Ansprüche,
**dadurch gekennzeichnet,**
**dass** die Führung (14) als eine einseitig zum Sperrglied (11) offene Nut (14) ausgeführt ist.

9. Vorrichtung (10) nach einem der vorhergehenden Ansprüche,
**dadurch gekennzeichnet,**
**dass** das Sicherungselement (13) zwei miteinander verbundene Arme (13c,13d) aufweist, wobei am freien Ende des ersten Arms (13c) der erste Bereich (13a) und am freien Ende des zweiten Armes (13d) der zweite Bereich (13b) ausgebildet ist.

10. Vorrichtung (10) nach Anspruch 9,
**dadurch gekennzeichnet,**
**dass** die Arme (13c,13d) des Sicherungselementes (13) zueinander fluchtend angeordnet sind.

11. Vorrichtung (10) nach einem der vorhergehenden Ansprüche 8-10,
**dadurch gekennzeichnet,**
**dass** das Sicherungselement (13) linear, senkrecht zur ersten Achse (15) verschiebbar ist, wobei die Hubbewegung des Sicherungselementes (13) ausschließlich erfolgt, wenn der erste Bereich (13a) innerhalb des ersten Führungsbereiches (14a) der Nut (14) verfahren wird.

12. Vorrichtung (10) nach einem der vorhergehenden Ansprüche 2-11,
**dadurch gekennzeichnet,**
**dass** in der Entsicherungslage des Sicherungselementes (13) der erste Bereich (13a) des Sicherungselementes (13) innerhalb des zweiten Führungsbereich (14b) verfahrbar ist, ohne das eine Hubbewegung des Sicherungselementes (13) erfolgt, wobei gleichzeitig das Sperrglied (11) in seine jeweilige Position bewegbar ist.

13. Vorrichtung (10) nach einem der vorhergehenden Ansprüche,
**dadurch gekennzeichnet,**
**dass** das Steuerelement (12) über eine Antriebseinheit (20) translatorisch bewegbar ist.

14. Vorrichtung (10) nach Anspruch 13,
**dadurch gekennzeichnet,**
**dass** zwischen der Antriebseinheit (20) und dem Steuerelement (12) ein Koppelelement (16) angeordnet ist, das über die Antriebseinheit (20) translatorisch bewegbar ist und somit das Steuerelement (12) antreibt.

15. Vorrichtung (10) nach Anspruch 14,
**dadurch gekennzeichnet,**
**dass** das Sperrglied (11) mit einem Kontaktbereich (11b) ausgeführt ist, der bei der Bewegung des Sperrgliedes (11) aus der Verriegelungsposition in die Entriegelungsposition durch das Koppelelement (16) mitbewegt wird.

16. Vorrichtung (10) nach Anspruch 15,
**dadurch gekennzeichnet,**
**dass** das Sperrglied (11) eine Ausnehmung (18) aufweist, die zu einer Seite durch den Kontaktbereich (11b) begrenzt ist und in der das Koppelelement (16) zumindest teilweise sich erstreckt.

17. Vorrichtung (10) nach Anspruch 16,
**dadurch gekennzeichnet,**
**dass** die Antriebseinheit (20) ein scheibenförmiges Antriebselement (21) aufweist, das um eine Drehachse antreibbar ist, wobei das Antriebselement (21) mit einer Führungsbahn (22) versehen ist, entlang dieser Bahn (22) das Koppelelement (16) führbar ist.

18. Vorrichtung (10) nach einem der vorhergehenden Ansprüche,
**dadurch gekennzeichnet,**
**dass** ein Federelement (17) als Energiespeicher zwischen dem Steuerelement (12) und einem feststehenden Gehäuseteil (40) der Vorrichtung (10) vorgesehen ist.

19. Vorrichtung (10) nach einem der vorhergehenden Ansprüche,
**dadurch gekennzeichnet,**
**dass** das Steuerelement (12) einen Aufnahmebereich (12a) aufweist, in dem das Sperrglied (11) entlang der ersten Achse (15) verschiebbar gelagert ist, wobei im Aufnahmebereich (12a) eine Ausgleichsfeder (19) angeordnet ist, die auf das Sperrglied (11) wirkt.

20. Vorrichtung (10) nach einem der vorhergehenden Ansprüche,
**dadurch gekennzeichnet,**
**dass** das Sicherungselement (13) in der Sicherungslage ein Schaltelement (42) betätigt.

21. Vorrichtung (10) nach Anspruch 20,
**dadurch gekennzeichnet,**
**dass** das Schaltelement (42) ein Mikroschalter ist, der am Gehäuseteil (40) befestigt ist.

## Claims

1. A device (10) for actuating a movable blocking member (11) of a functionally essential component (30), in particular of a steering column or of a gear shift lever of a motor vehicle, having
the blocking member (11), which can be put into at least two positions, namely into
a locking position, in which the blocking member (11) is in an operative connection with the functionally essential component (30), and
an unlocking position, in which the blocking member (11) is detached from the functionally essential component (30), and
a securing element (13), which can be moved by a control element (12) into a securing state and into a releasing state, whereby, in the securing state, the securing element (13) arrests the blocking member (11) in its unlocking position,
whereby the securing element (13) is designed with a first (13a) and a second region (13b), whereby
the first region (13a) engages a guide (14) of the control element (12), as a result of which the securing element (13) is forcibly guided from its releasing state into the securing state, **characterised in that**
the second region (13b) cooperates with a control surface (11a) of the blocking member (11) such that, during the locking process, the second region (13b) of the securing element (13) slides along the control surface (11a) of the blocking member (11) that moves towards the locking position, in order to prevent the blocking member (11) from striking the functionally essential component.

2. The device (10) according to claim 1,
**characterised in that**
the guide (14) is configured to have at least two guiding regions (14a,14b), whereby, during the movement of the control element (12), the first region (13a) proceeds along the guiding regions (14a,14b), as a result of which the securing element (13) performs a stroke movement.

3. The device (10) according to claim 2,
**characterised in that**
a first guiding region (14a) has a first guiding direction, and a second guiding region (14b) has a second guiding direction.

4. The device (10) according to claim 3,
**characterised in that**
the first guiding direction is oriented at an angle to the second guiding direction.

5. The device (10) according to claim 3 or 4,
**characterised in that**
the first and second guiding regions (14a, 14b) have a linear or curved course.

6. The device (10) according to one of the preceding claims,
**characterised in that**
the blocking member (11) can be moved translationally along a first axis (15) into its respective position, whereby the control surface (11a) is oriented diagonally to the first axis (15) and the second region (13b) of the securing element (13) is adapted to the control surface (11 a).

7. The device (10) according to claim 6,
**characterised in that**
the control surface (11a) has an angle α relative to the first axis (15), which is in a range of 20° ≤ α ≤ 80°, preferably in a range of 30° ≤ α ≤ 60°.

8. The device (10) according to one of the preceding claims,
**characterised in that**
the guide (14) is designed as a groove (14) that is open at one side towards the blocking member (11).

9. The device (10) according to one of the preceding claims,
**characterised in that**
the securing element (13) has two arms (13c, 13d) connected to one another, whereby the first region (13a) is configured at the free end of the first arm (13c) and the second region (13b) is configured at the free end of the second arm (13d).

10. The device (10) according to claim 9,
**characterised in that**
the arms (13c,13d) of the securing element (13) are arranged aligned with one another.

11. The device (10) according to one of the preceding claims 8 - 10,
**characterised in that**
the securing element (13) is displaceable linearly, perpendicularly to the first axis (15), whereby the stroke movement of the securing element (13) takes place only when the first region (13a) proceeds inside the first guiding region (14a) of the groove (14).

12. The device (10) according to one of the preceding claims 2 - 11,
**characterised in that**
when the securing element (13) is in the releasing state, the first region (13a) of the securing element (13) can proceed within the second guiding region (14b) without there occurring a stroke movement of the securing element (13), whereby the blocking member (11) can, at the same time, be moved into its respective position.

13. The device (10) according to one of the preceding claims,
**characterised in that**
the control element (12) can be moved translationally via a drive unit (20).

14. The device (10) according to claim 13,
**characterised in that**
there is arranged between the drive unit (20) and the control element (12) a coupling element (16), which can be moved translationally by means of the drive unit (20) and thus drives the control element (12).

15. The device (10) according to claim 14,
**characterised in that**
the blocking member (11) is designed with a contact region (11b), which is entrained by the coupling element (16) when the blocking member (11) is moved out of the locking position into the unlocking position.

16. The device (10) according to claim 15,
**characterised in that**
the blocking member (11) has a recess (18), which is limited at one side by the contact region (11b) and in which the coupling element (16) extends at least partly.

17. The device (10) according to claim 16,
**characterised in that**
the drive unit (20) has a disc-shaped drive element (21), which can be driven around a pivot axis, whereby the drive element (21) is equipped with a guiding track (22), along which track (22) the coupling element (16) can be guided.

18. The device (10) according to one of the preceding claims,
**characterised in that**
a spring element (17) is provided as an energy store between the control element (12) and a fixed casing part (40) of the device (10).

19. The device (10) according to one of the preceding claims,
**characterised in that**
the control element (12) has a receiving region (12a), in which the blocking member (11) is mounted displaceably along the first axis (15), whereby there is arranged in the receiving region (12a) an equalising spring (19), which acts on the blocking member (11).

20. The device (10) according to one of the preceding claims,
**characterised in that**
the securing element (13) operates a switch element (42) in the securing state.

21. The device (10) according to claim 20,
**characterised in that**
the switch element (42) is a microswitch attached to the casing part (40).

## Revendications

1. Dispositif (10) d'activation d'un organe mobile (11) de blocage d'une pièce structurelle (30) fonctionnellement essentielle, en particulier d'une colonne de direction ou d'un levier de changement de vitesses d'un véhicule automobile, comprenant ledit organe de blocage (11) pouvant être amené à au moins deux emplacements, c'est-à-dire
un emplacement de verrouillage dans lequel ledit organe de blocage (11) est en liaison opérante avec la pièce structurelle (30) fonctionnellement essentielle, et un emplacement de déverrouillage dans lequel ledit organe de blocage (11) est dissocié d'avec ladite pièce structurelle (30) fonctionnellement essentielle, et un élément d'arrêt (13) pouvant être mû, sous l'action d'un élément de commande (12), vers une position d'arrêt et vers une position de libération, sachant que, dans ladite position d'arrêt, ledit élément d'arrêt (13) consigne fermement ledit organe de blocage (11) à son emplacement de déverrouillage,
ledit élément d'arrêt (13) étant réalisé pour comporter des première (13a) et seconde (13b) régions, sachant que
ladite première région (13a) pénètre dans un guide (14) de l'élément de commande (12), de sorte que l'élément d'arrêt (13) est guidé, à force, de sa position de libération à la position d'arrêt, **caractérisé par le fait que** la seconde région (13b) coopère avec une surface de commande (11a) de l'organe de blocage (11) de façon telle que, lors du processus de verrouillage, ladite seconde région (13b) dudit élément d'arrêt (13) glisse le long de ladite surface de commande (11a) de l'organe de blocage (11) se mouvant en direction de l'emplacement de verrouillage, afin d'empêcher une venue en butée dudit organe de blocage (11) contre la pièce structurelle (30) fonctionnellement essentielle.

2. Dispositif (10) selon la revendication 1,
**caractérisé par le fait**
**que** le guide (14) est réalisé pour offrir au moins deux zones de guidage (14a, 14b), la première région (13a) se déplaçant le long desdites zones de guidage (14a, 14b), au cours du mouvement de l'élément de commande (12), de sorte que l'élément d'arrêt (13) effectue une course.

3. Dispositif (10) selon la revendication 2,
**caractérisé par le fait**
**qu'**une première zone de guidage (14a) présente une première direction de guidage, et une seconde zone de guidage (14b) présente une seconde direction de guidage.

4. Dispositif (10) selon la revendication 3,
**caractérisé par le fait**
**que** la première direction de guidage est orientée en décrivant un angle vis-à-vis de la seconde direction de guidage.

5. Dispositif (10) selon la revendication 3 ou 4,
**caractérisé par le fait**
**que** les première et seconde zones de guidage (14a, 14b) offrent un tracé rectiligne ou en arc de cercle.

6. Dispositif (10) selon l'une des revendications précédentes,
**caractérisé par le fait**
**que** l'organe de blocage (11) peut être mû, vers son emplacement considéré, par translation le long d'un premier axe (15), la surface de commande (11a) étant orientée à l'oblique par rapport audit premier axe (15), et la seconde région (13b) de l'élément d'arrêt (13) étant adaptée à ladite surface de commande (11a).

7. Dispositif (10) selon la revendication 6,
**caractérisé par le fait**
**que** la surface de commande (11a) décrit, avec le premier axe (15), un angle α situé dans une plage de 20° ≤ α ≤ 80°, de préférence dans une plage de 30° ≤ α ≤ 60°.

8. Dispositif (10) selon l'une des revendications précédentes,
**caractérisé par le fait**
**que** le guide (14) est réalisé sous la forme d'une rainure (14) ouverte, d'un côté, vers l'organe de blocage (11).

9. Dispositif (10) selon l'une des revendications précédentes,
**caractérisé par le fait**
**que** l'élément d'arrêt (13) comporte deux bras (13c, 13d) reliés l'un à l'autre, la première région (13a) étant ménagée à l'extrémité libre du premier bras (13c), et la seconde région (13b) étant ménagée à l'extrémité libre du second bras (13d).

10. Dispositif (10) selon la revendication 9,
**caractérisé par le fait**
**que** les bras (13c, 13d) de l'élément d'arrêt (13) sont agencés avec alignement mutuel.

11. Dispositif (10) selon l'une des revendications précédentes 8 à 10, **caractérisé par le fait**
**que** l'élément d'arrêt (13) peut accomplir des coulissements linéaires perpendiculairement au premier axe (15), la course dudit élément d'arrêt (13) s'opérant exclusivement lorsque la première région (13a) est déplacée à l'intérieur de la première zone de guidage (14a) de la rainure (14).

12. Dispositif (10) selon l'une des revendications précédentes 2 à 11, **caractérisé par le fait**
**que**, dans la position de libération de l'élément d'arrêt (13), la première région (13a) dudit élément d'arrêt (13) peut être déplacée, à l'intérieur de la seconde zone de guidage (14b), sans qu'il ne s'opère aucune course dudit élément d'arrêt (13), l'organe de blocage (11) pouvant être mû, dans le même temps, vers son emplacement considéré.

13. Dispositif (10) selon l'une des revendications précédentes,
**caractérisé par le fait**
**que** l'élément de commande (12) peut être animé de mouvements translatoires par l'intermédiaire d'une unité d'entraînement (20).

14. Dispositif (10) selon la revendication 13,
**caractérisé par le fait**
**qu'**un élément d'accouplement (16), interposé entre l'unité d'entraînement (20) et l'élément de commande (12), peut être animé de mouvements translatoires par l'intermédiaire de ladite unité d'entraînement (20) et entraîne, de la sorte, ledit élément de commande (12).

15. Dispositif (10) selon la revendication 14,
**caractérisé par le fait**
**que** l'organe de blocage (11) est réalisé pour présenter une zone de contact (11b) entraînée, par l'élément d'accouplement (16), lors du mouvement dudit organe de blocage (11) de l'emplacement de verrouillage à l'emplacement de déverrouillage.

16. Dispositif (10) selon la revendication 15,
**caractérisé par le fait**
**que** l'organe de blocage (11) possède un évidement (18) délimité par la zone de contact (11b), vers un côté, et dans lequel l'élément d'accouplement (16) s'étend au moins partiellement.

17. Dispositif (10) selon la revendication 16,
**caractérisé par le fait**
**que** l'unité d'entraînement (20) comporte un élément discoïdal d'entraînement (21) pouvant être mené autour d'un axe de rotation, lequel élément d'entraînement (21) est pourvu d'une piste de guidage (22), l'élément d'accouplement (16) pouvant être guidé le long de cette piste (22).

18. Dispositif (10) selon l'une des revendications précédentes,
**caractérisé par le fait**
**qu'**un élément élastique ou de ressort (17) est prévu, en tant qu'accumulateur d'énergie, entre l'élément de commande (12) et une partie stationnaire (40) du boîtier dudit dispositif (10).

19. Dispositif (10) selon l'une des revendications précédentes,
**caractérisé par le fait**
**que** l'élément de commande (12) présente une zone réceptrice (12a) dans laquelle l'organe de blocage (11) est monté à coulissement le long du premier axe (15), ladite zone réceptrice (12a) renfermant un ressort compensateur (19) qui agit sur ledit organe de blocage (11).

20. Dispositif (10) selon l'une des revendications précédentes,
**caractérisé par le fait**
**que** l'élément d'arrêt (13) actionne un élément de commutation (42) dans la position d'arrêt.

21. Dispositif (10) selon la revendication 20,
**caractérisé par le fait**
**que** l'élément de commutation (42) est un micro-interrupteur fixé à la partie (40) du boîtier.
